# DEMANDE DE BREVET EUROPEEN

(11) **EP 2 107 551 A1**
(43) Date de publication de la demande: **07.10.2009**
(21) Numéro de dépôt: 09156945.9
(22) Date de dépôt: 31.03.2009
(51) Int. Cl.: G09G 5/04, G09G 3/36, H04N 5/57

(54) **Procédé de conversion d'un signal vidéo pour compensation de flicker, et dispositif de conversion associé**

(30) Priorité: 03.04.2008 FR 0852213
(71) Demandeur: IRTS, 83100 Toulon (FR)
(72) Inventeur: KERBRAT, Jean-Marie, 83390 Cuers (FR)
(74) Mandataire: Bouchet, Geneviève

(57) **Abrégé**

L'invention concerne un procédé et un dispositif associé de conversion d'un premier signal vidéo en un deuxième signal vidéo, comprenant une succession de trames comprenant chacune une pluralité de points caractérisés par une luminance. Les points des trames du deuxième signal vidéo sont destinés à être affichés sur des pixels correspondant d'un dispositif d'affichage.

Le procédé comprend une étape de calcul de la luminance (LOₙ(i,j)) d'un point (POₙ(i,j)) d'une trame en cours du deuxième signal vidéo (TOₙ), par une somme pondérée d'une luminance (LIₙ(i,j)) d'un point correspondant (PIₙ(i,j)) d'une trame en cours du premier signal vidéo (TIₙ) et d'une luminance (LIₙ₋₁(i,j)) d'un point correspondant (PIₙ₋₁(i,j)) d'une trame précédemment mémorisée (TIₙ₋₁), et une étape de mémorisation de la luminance (LIₙ(i,j)) du point correspondant (PIₙ(i,j) de la trame en cours du premier signal vidéo (TIₙ). L'étape de calcul est répétée pour tous les points de la trame en cours du deuxième signal vidéo (TOₙ), l'étape de mémorisation est répétée pour tous les points de la trame en cours du premier signal vidéo (TIₙ).

## Description

L'invention concerne l'affichage sur un dispositif d'affichage (par exemple de type LCD, Liquid cristal display) comprenant un ensemble de pixels. Un signal vidéo à afficher sur un tel dispositif d'affichage comprend une succession de trames à afficher comprenant chacune un ensemble de points, chaque point étant associé à un pixel de l'écran. Les trames à afficher se succèdent à une vitesse de l'ordre de 60 trames / s. Chaque point est caractérisé par une luminance définie par exemple dans un format dit RGB (pour Red Green Blue) par un mot binaire (de 24 bits par exemple) comprenant trois nombre binaires (de 8 bits par exemple), correspondant chacun à une valeur de luminance pour les trois couleurs fondamentales Rouge Vert et Bleu.

Sur un tel dispositif d'affichage, un problème connu est l'apparition de flashs lors d'un changement de trames. Ces flashs traduisent des variations importantes de la luminance d'un même point d'une trame à la suivante par rapport à la luminance d'un point adjacent. Un flash blanc apparaît lorsque la luminance d'un point augmente fortement d'une trame à l'autre. Inversement, un flash noir apparaît lorsque la luminance d'un point diminue fortement d'une trame à l'autre. L'apparition de flashs est due en partie au moins à la différence entre le temps de montée et le temps de descente de la luminance d'un pixel de l'écran. Le temps de montée est le temps mis par la luminance d'un pixel pour passer d'une première valeur à une deuxième valeur supérieure à la première. Inversement, le temps de descente est le temps mis par la luminance d'un pixel pour passer d'une première valeur à une deuxième valeur inférieure à la première. Le temps de montée et le temps de descente sont notamment fonction du type de pixel LCD, des variations dues au process de fabrication du dispositif d'affichage, de l'importance du saut de luminance (différence entre la première valeur et la deuxième valeur de luminance) à effectuer, de la température, de l'angle de vision, etc.

Ce problème est particulièrement gênant pour des applications où les images à afficher sont constituées essentiellement de tout petits objets d'une couleur et /ou d'une luminance très différente d'une couleur de fond de l'écran, comme par exemple des images fournies par un Sonar.

Plusieurs techniques sont envisagées pour résoudre ce problème. Le document D1 (WO 2007 / 007435) propose une technique consistant à insérer, entre deux trames d'un signal vidéo, une ou plusieurs trames intermédiaires dont la luminance des pixels est calculée par une somme pondérée de la luminance des pixels correspondant dans la trame précédente et de la luminance des pixels correspondant dans la trame suivante. La vitesse de défilement des trames est ainsi doublée. La technique de D1 est mise en oeuvre sous la forme d'un logiciel exécuté à l'intérieur d'un contrôleur vidéo situé en amont d'un dispositif d'affichage.

L'invention propose une alternative à cette technique.

Pour cela, l'invention propose un procédé de conversion d'un premier signal vidéo en un deuxième signal vidéo. Le premier signal vidéo et le deuxième signal vidéo comprennent une succession de trames comprenant chacune une pluralité de points caractérisés par une luminance. Les points des trames du deuxième signal vidéo sont destinés à être affichés sur des pixels correspondant d'un dispositif d'affichage (200). Le premier signal vidéo et le deuxième signal vidéo comprennent un même nombre de trames.

Le procédé selon l'invention comprend une étape de calcul de la luminance (Oₙ(i,j)) d'un point (POₙ(i,j)) d'une trame en cours du deuxième signal vidéo (TOₙ), par une somme pondérée d'une luminance (Iₙ(i,j)) d'un point correspondant (PIₙ(i,j)) d'une trame en cours du premier signal vidéo (TIₙ) et d'une luminance (Iₙ₋₁(i,j)) d'un point correspondant (PIₙ₋₁(i,j)) d'une trame précédemment mémorisée (TIₙ₋₁), et une étape de mémorisation de la luminance (Iₙ(i,j)) du point correspondant (PIₙ(i,j) de la trame en cours du premier signal vidéo (TIₙ), l'étape de calcul étant répétée pour tous les points de la trame en cours du deuxième signal vidéo (TOₙ), l'étape de mémorisation étant répétée pour tous les points de la trame en cours du premier signal vidéo (TIₙ).

Ainsi, dans le procédé selon l'invention, les points des trames du deuxième signal vidéo, destinés à être affichés sur le dispositif d'affichage, sont calculés à la volée, au fur et à mesure du défilement du premier signal vidéo, reçu par exemple d'un contrôleur vidéo. Par ailleurs, seule une trame du premier signal vidéo est mémorisée, les trames calculées du deuxième signal vidéo ne sont pas mémorisées et aucune trame du deuxième signal vidéo n'est utilisée pour calculer la suivante. De plus, comme seules les trames du deuxième signal vidéo sont affichées, et comme le deuxième signal vidéo comprend le même nombre de trames que le premier signal vidéo, la vitesse de défilement des trames du deuxième signal vidéo est la même que la vitesse de défilement des trames du premier signal vidéo.

Il s'ensuit que le procédé peut être mis en oeuvre par un dispositif approprié inséré entre le contrôleur vidéo et le dispositif d'affichage de systèmes connus, sans aucune modification ou adaptation du contrôleur et /ou du dispositif d'affichage de systèmes connus.

Dans le dispositif selon l'invention, la luminance des points des trames du deuxième signal vidéo est calculée à la volée, un point après l'autre, et les points sont affichés immédiatement sur le dispositif d'affichage. A chaque instant, seule une trame du premier signal vidéo est mémorisée, les trames du deuxième signal vidéo ne sont pas mémorisées. On limite ainsi d'une part le temps d'exécution du procédé selon l'invention, et d'autre part la taille des moyens de mémorisation des dispositifs susceptibles d'être utilisés pour la mise en oeuvre du procédé selon l'invention.

Au cours de l'étape de calcul, la somme pondérée peut être calculée de la manière suivante :
- une première étape de multiplication de la luminance (Iₙ(i,j)) du point (PIₙ(i,j)) de la trame en cours du premier signal vidéo (TIₙ) par un premier coefficient (K₁(i,j)),
- une deuxième étape de multiplication de la luminance (Iₙ₋₁(i,j)) du point correspondant (PIₙ₋₁(i,j)) de la trame précédemment mémorisée (TIₙ₋₁) par un deuxième coefficient (K₂(i,j)), et
- une addition du résultat de la première multiplication au résultat de la deuxième multiplication, le résultat de l'addition (Oₙ(i,j)) étant la luminance du point correspondant (POₙ(i,j) de la trame en cours du deuxième signal vidéo (TOₙ).

L'étape de calcul comprend ainsi deux multiplications par un coefficient et une addition. Les deux multiplications sont de préférence réalisées en parallèle, et l'addition est réalisée de préférence en parallèle des multiplications : l'addition peut en effet se faire bit à bit au fur et à mesure de la sortie des bits de résultat des moyens de multiplication. Ainsi, la réalisation de l'étape de calcul est particulièrement rapide.

La première étape de multiplication ou la deuxième étape de multiplication peuvent comprendre la lecture, dans une première table (124a) ou dans une deuxième table (124b), du premier coefficient (K₁(i,j)) ou du deuxième coefficient (K₂(i,j)) en fonction de la luminance (Iₙ(i,j)) du point de la trame en cours du premier signal (TIₙ) et de la luminance (Iₙ₋₁(i,j)) du point de la trame précédemment mémorisée (TIₙ₋₁). La première table et la deuxième table peuvent être mémorisées soit dans le dispositif mettant en oeuvre le procédé selon l'invention dans un moyen de mémorisation approprié (registre, mémoire réinscriptible, etc.), soit à l'extérieur du dispositif mettant en oeuvre le procédé selon l'invention. La première solution est généralement plus rapide car les temps d'accès à un moyen de mémorisation internes sont généralement moins longs que les temps d'accès à un moyen de mémorisation externe.

Comme dit précédemment, la luminance d'un point peut être définie par un nombre binaire de X bits. Dans ce cas, dans le procédé selon l'invention, la lecture du premier coefficient ou du deuxième coefficient est effectuée en fonction de X-Y bits de poids forts de la luminance du point de la trame en cours du premier signal vidéo et de X-Y bits de poids forts de la luminance du point de la trame précédemment mémorisée, Y étant un nombre entier compris entre 0 et X. Choisir Y = 0 permet d'associer un premier coefficient et un deuxième coefficient à chaque couple de luminances comprenant la luminance du point de la trame en cours et la luminance du point correspondant de la trame précédente dans le premier signal vidéo. Choisir Y = X-1 permet d'utiliser un unique premier coefficient et un unique deuxième coefficient quelle que soit la luminance du point considéré de la trame en cours et quelle que soit la luminance du point correspondant de la trame précédente. Le choix de Y est ainsi un compromis entre la taille du moyen de mémorisation dans lequel sont mémorisés les tables de coefficients (taille inversement proportionnelle à Y) et la qualité de la correction des flashs (la qualité de la correction augmente avec Y). Un compromis peut être de choisir Y = 2 à 4 pour X = 8 bits.

La température ambiante peut être prise en compte dans le procédé selon l'invention. Pour cela, le procédé selon l'invention peut comprendre une étape de sélection, en fonction d'une température ambiante, de la première table et de la deuxième table parmi une pluralité de premières tables et une pluralité de deuxièmes tables, chaque première table et chaque deuxième table étant associées à une plage de températures. Ceci permet de tenir compte du comportement des pixels du dispositif d'affichage, comportement qui évolue en fonction de la température. L'étape de sélection de tables peut être effectuée à tout moment, au début du procédé, mais également à tout moment au cours d'un traitement d'un signal vidéo si une variation de la température ambiante nécessite un changement de tables.

L'invention concerne également un dispositif de conversion adapté pour la mise en oeuvre du procédé décrit ci-dessus et comprenant :
- un moyen d'entrée (110), pour recevoir une luminance (LIₙ(i,j)) d'un point (PIₙ(i,j)) d'une trame (TIₙ) en cours d'un premier signal vidéo,
- un moyen de calcul (120), pour calculer à la volée une luminance (LOₙ(i,j)) d'un point (POₙ(i,j)) correspondant d'une trame (TOₙ) en cours d'un deuxième signal vidéo par une somme pondérée de la luminance (LIₙ(i,j)) du point reçu (PIₙ(i,j)) et d'une luminance (LIₙ₋₁(i,j)) précédemment mémorisée du point (PIₙ₋₁(i,j)) correspondant d'une trame précédant (TIₙ₋₁) la trame en cours (TIₙ) du premier signal, et
- un premier moyen de mémorisation (130) pour mémoriser la luminance (LIₙ(i,j)) du point reçu (PIₙ(i,j)) et de taille appropriée pour mémoriser tous les points d'une trame,
- un moyen de sortie (140) pour fournir à un dispositif d'affichage (200) un résultat (LOₙ(i,j) fourni par le moyen de calcul.

Dans le dispositif selon l'invention, un point d'une trame en cours du deuxième signal vidéo est calculé à la volée à partir du point correspondant d'une trame en cours du premier signal vidéo et d'un point correspondant d'une trame précédente du premier signal vidéo. Le dispositif selon l'invention reçoit un point du premier signal et fournit en sortie un point correspondant du deuxième signal vidéo. Le dispositif selon l'invention est ainsi transparent pour les dispositifs qui l'entourent, comme on le verra mieux par la suite, et il peut être aisément inséré entre un dispositif d'affichage connu et un contrôleur vidéo connu associé.

L'invention sera mieux comprise et d'autres caractéristiques et avantages apparaîtront à la lecture de la description qui va suivre, d'un exemple de mise en oeuvre d'un procédé de conversion d'un signal vidéo et selon l'invention et d'un dispositif de conversion associé. La description est à lire en relation aux dessins annexés dans lesquels :
- la figure 1 est un schéma bloc d'un dispositif de conversion selon l'invention,
- la figure 2 est un diagramme montrant les différentes étapes du procédé selon l'invention.

Comme il a été dit précédemment, le procédé selon l'invention convertit un premier signal vidéo en un deuxième signal vidéo. Le premier signal vidéo et le deuxième signal vidéo comprennent chacun une succession de trames comprenant chacune une pluralité de points caractérisés par une luminance. Les points des trames du deuxième signal vidéo sont destinés à être affichés sur des pixels correspondant d'n dispositif d'affichage 200.

Afin de faciliter la compréhension des explications qui suivent, on donne les définitions suivantes.

le couple d'indices (i,j) indique la position (ligne, colonne) d'un point considéré dans une trame ; on dira que deux points de deux trames différentes correspondent s'ils ont la même position (définie par le même couple (i,j)) dans leurs trames respectives ; on dira également que deux points sont adjacents dans une même trame si leur indice de ligne et / ou leur indice de colonne diffère de 1.

TIₙ est une trame de rang n du premier signal vidéo.

TOₙ est une trame de rang n du deuxième signal vidé.

PIₙ(i,j) est un point de position (i,j) dans la trame TIₙ de rang n du premier signal vidéo.

Une trame d'un signal vidéo appelée "trame en cours" est la trame en cours de traitement selon le procédé selon l'invention ; la trame en cours de traitement est par exemple la trame de rang n.

POₙ(i,j) est, dans la trame TOₙ de rang n du deuxième signal vidéo, le point correspondant au point PIₙ(i,j).

LIₙ(i,j) est la luminance du point PIₙ(i,j).

LOₙ(i,j) est la luminance du point POₙ(i,j).

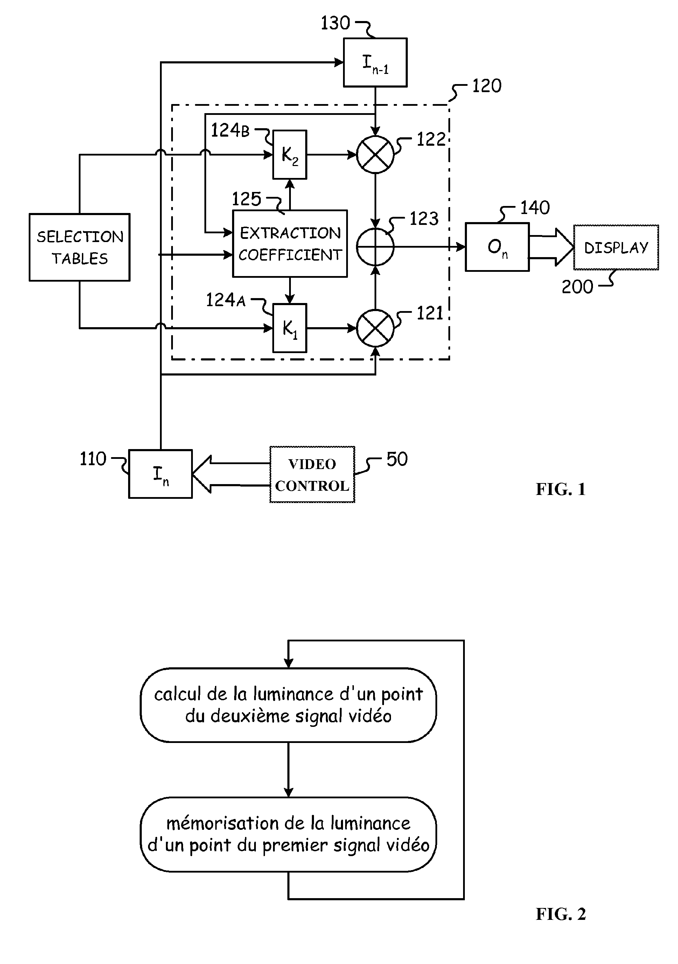

Le procédé selon l'invention comprend essentiellement (figure 2) :
- une étape de calcul de la luminance LOₙ(i,j) d'un point POₙ(i,j) d'une trame en cours du deuxième signal vidéo TOₙ, par une somme pondérée d'une luminance LIₙ(i,j) d'un point correspondant PIₙ(i,j) d'une trame en cours du premier signal vidéo Tiₙ et d'une luminance LIₙ₋₁(i,j) d'un point correspondant PIₙ₋₁(i,j) d'une trame précédemment mémorisée TIₙ₋₁, et
- une étape de mémorisation de la luminance LIₙ(i,j) du point correspondant PIₙ(i,j) de la trame en cours du premier signal vidéo TIₙ.

L'étape de calcul est répétée pour tous les points de la trame en cours du deuxième signal vidéo TOₙ, et l'étape de mémorisation est répétée pour tous les points de la trame en cours du premier signal vidéo TIₙ.

Le dispositif de conversion selon l'invention comprend essentiellement :
- un moyen d'entrée 110, pour recevoir une luminance d'un point d'une trame en cours d'un premier signal vidéo,
- un moyen de calcul 120, pour calculer à la volée une luminance d'un point correspondant d'une trame en cours d'un deuxième signal vidéo par une somme pondérée de la luminance du point reçu et d'une luminance précédemment mémorisée du point correspondant d'une trame précédant la trame en cours du premier signal, et
- un premier moyen de mémorisation 130 pour mémoriser la luminance du point reçu dans une mémoire susceptible de mémoriser tous les points d'une trame,
- un moyen de sortie 140 pour fournir à un dispositif d'affichage un résultat fourni par le moyen de calcul.

Un contrôleur vidéo 50 est généralement associé en amont d'un dispositif d'affichage 200, par exemple de type LCD. Le contrôleur vidéo est une interface adaptée pour convertir un signal tel qu'un signal VGA analogique ou un signal DVI ou HDMI numérique, en un signal numérique de format (par exemple LVDS) directement exploitable par le dispositif d'affichage.

Dans le cadre de l'invention, le dispositif selon l'invention est inséré entre le contrôleur vidéo 50 et le dispositif d'affichage 200.

Le moyen d'entrée 110 comprend notamment un moyen pour recevoir le premier signal vidéo, par exemple dans un format LVDS (Low-voltage differential signaling). Le moyen d'entrée peut également comprendre un moyen de conversion, pour convertir le premier signal vidéo en un signal numérique exploitable par le moyen de calcul 120.

Le moyen de calcul 120 est par exemple un circuit de logique programmable tel qu'un FPGA (Field Programmable Gate Array), de préférence reprogrammable.

Le premier moyen de mémorisation 130 est approprié pour mémoriser une trame de données complète du premier signal vidéo. Il comprend par exemple un ou plusieurs bancs mémoire de taille(s) suffisante(s) pour mémoriser la luminance de tous les points d'une trame d'un signal vidéo de définition 2560*1600, et des moyens de lecture et d'écriture dans le(s) banc(s) mémoire.

Le moyen de sortie 140 est symétrique du moyen d'entrée 110. Il comprend notamment un moyen pour transmettre le deuxième signal vidéo au dispositif d'affichage. Il peut également comprendre un moyen de conversion du signal produit par le moyen de calcul dans un format (par exemple le format LVDS) directement exploitable par le dispositif d'affichage 200.

Dans l'exemple représenté figure 1, le moyen de calcul comprend :
- un premier circuit de multiplication 121, pour multiplier la luminance du point reçu par un premier coefficient,
- un deuxième circuit de multiplication 122, pour multiplier la luminance du point précédemment mémorisé correspondant au point reçu par un deuxième coefficient,
- un circuit d'addition 123 pour additionner un résultat fourni par le premier circuit de multiplication et un résultat fourni par le deuxième circuit de multiplication et fournir un résultat au moyen de sortie.

Le moyen de calcul détermine ainsi la luminance LOₙ(i,j) d'un point POₙ(i,j) situé dans la i-ème ligne et la j-ième colonne d'une trame TOₙ du deuxième signal vidéo associé à un point reçu PIₙ(i,j) d'une trame TIₙ du premier signal vidéo selon la relation :
LOₙ = K₁(i,j)*LIₙ + K₂(i,j)*LIₙ₋₁, où:
   LIₙ est la luminance du point reçu PIₙ(i, j),
   LIₙ₋₁ est la luminance du point PIₙ₋₁(i,j) mémorisé dans le moyen 130 correspondant (même ligne, même colonne ou rang dans la ligne) au point reçu,
   K₁(i,j) est le premier coefficient et K₂(i,j) est le deuxième coefficient. Ils sont liés par la relation :
      K₁(i,j) + K₂(i,j) = 1

LOₙ est la luminance du point POₙ(i,j) de la trame TOₙ du deuxième signal vidéo correspondant (même ligne, même colonne) au point reçu PIₙ(i,j).

On notera que, si la luminance d'un point est inchangée entre deux trames du premier signal vidéo, c'est le cas par exemple si deux trames successives au moins sont identiques, alors la luminance calculée LOₙ du point du deuxième signal POₙ vidéo est identique à la luminance LIₙ du point reçu du premier signal vidéo PIₙ. Dit autrement, si LIₙ = LIₙ₋₁, alors LOn = LIₙ = LIₙ₋₁.

Si par contre la luminance d'un point du premier signal vidéo change entre deux trames du premier signal vidéo, alors la luminance calculée LOₙ du point POₙ du deuxième signal vidéo est intermédiaire entre la luminance LIₙ du point reçu et la luminance LIₙ₋₁ du point correspondant mémorisé.

Dans autre exemple, si LIₙ₋₂ = LIₙ₋₁ < LIₙ = LIₙ₊₁ :
LOₙ₋₁ = LIₙ₋₂ = LIₙ₋₁
LIₙ₋₁ < LOₙ < LIₙ
LOₙ₊₁ = LIₙ₊₁ = LIₙ

Dans cet exemple, le changement de luminance (LIₙ₋₁ < LIₙ) entre deux trames du premier signal vidéo (soit une période du premier signal vidéo) a été étalé sur trois trames dans le deuxième signal vidéo (soit deux périodes du deuxième signal vidéo. Dans le deuxième signal vidéo, le changement de luminance est ainsi moins rapide, moins abrupte, les flashs sont ainsi très fortement atténués, voire annulés, de sorte que l'utilisateur ne perçoit pas de flash sur le dispositif d'affichage.

Dans l'exemple de la figure 1, le moyen de calcul 120 comprend également :
- un deuxième moyen de mémorisation 124a, 124b pour mémoriser une première table contenant des valeurs du premier coefficient et une deuxième table contenant des valeurs du deuxième coefficient, et
- un moyen 125 pour extraire le premier coefficient K₁(i,j) de la première table et le deuxième coefficient K₂(i,j) de la deuxième table, en fonction de la luminance Iₙ du point reçu PIₙ(i ,j) et de la luminance du point précédemment mémorisé correspondant au point reçu.

Dans un mode de réalisation, la première table ou la deuxième table comprennent autant de coefficients qu'il existe de couples de luminances (LIₙ, LIₙ₋₁). Si la luminance d'un point est définie par un nombre binaire de X = 8 bits, elle peut prendre 2⁸ = 256 valeurs possibles. Aussi, la première table et la deuxième table comprennent par exemple 256 lignes et 256 colonnes de sorte qu'une valeur de coefficient K₁ ou K₂ est associée à chaque couple de luminances (LIₙ, LIₙ₋₁).

Dans un autre mode de réalisation, une même valeur de coefficient K1 ou K2 est associée à plusieurs couples de luminances (LIₙ, LIₙ₋₁), ayant des valeurs de luminance Iₙ, Iₙ₋₁ assez proches. Par exemple, dans le cas où les luminances sont définies par des nombres binaires de X bits, il est possible d'utiliser des tables de coefficients comprenant 2^{X-Y} lignes et 2^{X-y} colonnes, avec Y compris entre O et X. Dans ce cas, un même coefficient est utilisé pour 2^{Y}*2^{Y} couples de luminances (LIₙ, LIₙ₋₁), un même coefficient étant associé à des luminances LIₙ, LIₙ₋₁ dont les X-Y bits de poids forts sont identiques. Par exemple pour des luminances définies par des nombres binaires de X = 8 bits, il est possible d'utiliser des tables de coefficients comprenant 2⁴ lignes et 2⁴ colonnes, et d'utiliser un même coefficient de la table pour des couples de luminances (LIₙ, LIₙ₋₁) définis par des nombres binaires dont les 4 bits de poids forts sont les mêmes, soit un même coefficient K1 et un même coefficient K2 pour 16 * 16 couples de valeurs (LIₙ, LIₙ₋₁).

Dans l'exemple de la figure 1, le dispositif selon l'invention comprend également un moyen 150 pour sélectionner, en fonction d'une température ambiante, la première table et la deuxième table parmi une pluralité de premières tables et une pluralité de deuxièmes tables en fonction de la température, chaque première table de la pluralité de première table et chaque deuxième table de la pluralité de deuxième table étant associées à une plage de températures, et pour mémoriser la première table et la deuxième table dans le moyen de calcul 120.

La valeur de la température ambiante peut être fournie soit par un capteur de mesure du dispositif 160, soit par un dispositif externe relié au dispositif selon l'invention par une interface d'entrée / sortie 170.

La pluralité de premières tables et la pluralité de deuxièmes tables sont mémorisées par exemple dans le moyen de mémorisation 130, dans un autre moyen de mémorisation à l'intérieur du dispositif selon l'invention, ou à l'extérieur du dispositif selon l'invention. Dans ce dernier cas, la première table et la deuxième table sélectionnées sont transmises au moyen de sélection par une l'intermédiaire d'une interface d'entrée / sortie 180.

Les premières et deuxièmes tables de coefficients sont obtenues par des mesures à différentes températures. Le banc de mesure comprend, associés en boucle :
- un contrôleur vidéo connu pour transmettre au dispositif d'affichage un premier signal vidéo au moins deux trames à afficher,
- un dispositif de conversion selon l'invention,
- un dispositif d'affichage connu, dont on souhaite améliorer l'affichage avec l'invention,
- un dispositif de mesure apte à détecter un éventuel flash sur le dispositif d'affichage ; le dispositif de mesure comprend une cellule photoélectrique associée à un oscilloscope,
- un dispositif de commande pour, en fonction d'un signal reçu de la cellule photoélectrique, ajuster un paramètre de la première matrice et un paramètre de la deuxième matrice, transmettre la première matrice et la deuxième matrice modifiées au dispositif de conversion, et transmettre un nouveau premier signal vidéo au contrôleur vidéo.

La mesure est réalisée par exemple de la manière suivante. Deux trames au moins sont transmises au dispositif d'affichage par le contrôleur vidéo : une première trame comprenant des points ayant une première luminance LIₙ₋₁, et une deuxième trame comprenant un ou quelques points ayant une deuxième luminance LIₙ répartis parmi un ensemble de points ayant la première luminance. Les trames sont converties par le dispositif de conversion selon l'invention et le deuxième signal vidéo résultant est transmis au dispositif d'affichage. Si un flash est détecté par le dispositif de mesure, une nouvelle mesure est effectuée en modifiant la luminance LIₙ. La mesure et l'ajustement des coefficients de la première table et de la deuxième table sont répétés tant qu'un flash est détecté.

Lorsqu'aucun flash n'est détecté par la cellule photoélectrique, la dernière valeur des coefficients est conservée. Si, pour certains cas extrêmes, il n'est pas possible d'ajuster la valeur des coefficients pour supprimer tout flash, on pourra envisager d'ajuster les coefficients pour seulement diminuer l'importance d'un flash, en amplitude et / ou en durée, en dessous d'un seuil acceptable pour l'utilisateur, voire en tolérant un petit flash de couleur inverse, d'amplitude et de durée également limitée à un seuil acceptable par l'utilisateur. De tels cas extrêmes correspondent par exemple à de très fortes variations de luminance d'un point entre deux trames.

La mesure et l'ajustement des coefficients sont ensuite répétés pour tous les coefficients de la première table et de la deuxième table.

Une partie au moins des étapes de mesure, notamment les dernières étapes permettant d'affiner la valeur des coefficients peut être effectuée par une personne physique, afin de prendre en compte des différences de perception entre l'oeil humain et le dispositif de mesure.

## Revendications

1. Procédé de conversion d'un premier signal vidéo en un deuxième signal vidéo, le premier signal vidéo et le deuxième signal vidéo comprenant une succession de trames comprenant chacune une pluralité de points **caractérisés par** une luminance, les points des trames du deuxième signal vidéo étant destinés à être affichés sur des pixels correspondant d'un dispositif d'affichage (150),
le procédé comprenant une étape de calcul de la luminance (LOₙ(i,j)) d'un point (POₙ(i,j)) d'une trame en cours du deuxième signal vidéo (TOₙ), par une somme pondérée d'une luminance (LIₙ(i,j)) d'un point correspondant (PIₙ(i,j)) d'une trame en cours du premier signal vidéo (TIₙ) et d'une luminance (LIₙ₋₁(i,j)) d'un point correspondant (PIₙ₋₁(i,j)) d'une trame précédemment mémorisée (TIₙ₋₁), et une étape de mémorisation de la luminance (LIₙ(i,j)) du point correspondant (PIₙ(i,j) de la trame en cours du premier signal vidéo (TIₙ), l'étape de calcul étant répétée pour tous les points de la trame en cours du deuxième signal vidéo (TOₙ), l'étape de mémorisation étant répétée pour tous les points de la trame en cours du premier signal vidéo (TIₙ).

2. Procédé selon la revendication 1, dans lequel l'étape de calcul comprend une première étape de multiplication de la luminance (LIₙ(i,j)) du point (PIₙ(i,j)) de la trame en cours du premier signal vidéo (TIₙ) par un premier coefficient (K₁(i,j)), une deuxième étape de multiplication de la luminance (LIₙ₋₁(i,j)) du point correspondant (PIₙ₋₁(i,j)) de la trame précédemment mémorisée (TIₙ₋₁) par un deuxième coefficient (K₂(i,j)), et une addition du résultat de la première multiplication au résultat de la deuxième multiplication, le résultat de l'addition (Oₙ(i,j)) étant la luminance du point correspondant (POₙ(i,j) de la trame en cours du deuxième signal vidéo (TOₙ).

3. Procédé selon la revendication 2, dans lequel la première étape de multiplication ou la deuxième étape de multiplication comprennent la lecture, dans une première table (124a) ou dans une deuxième table (124b), du premier coefficient (K₁(i,j)) ou du deuxième coefficient (K₂(i,j)) en fonction de la luminance (LIₙ(i,j)) du point de la trame en cours du premier signal (TIₙ) et de la luminance (LIₙ₋₁(i,j)) du point de la trame précédemment mémorisée (TIₙ₋₁).

4. Procédé selon la revendication 3, dans lequel la luminance d'un point est définie par un nombre binaire de X bits, et dans lequel la lecture du premier coefficient ou du deuxième coefficient est effectuée en fonction de X-Y bits de poids forts de la luminance du point de la trame en cours du premier signal vidéo et de X-Y bits de poids forts de la luminance du point de la trame précédemment mémorisée, Y étant un nombre entier compris entre 0 et X.

5. Procédé selon l'une des revendications 3 ou 4, comprenant également une étape de sélection, en fonction d'une température ambiante, de la première table et de la deuxième table parmi une pluralité de premières tables et une pluralité de deuxièmes tables, chaque première table et chaque deuxième table étant associées à une plage de températures.

6. Dispositif de conversion adapté pour la mise en oeuvre du procédé selon l'une des revendications précédentes, comprenant :
• un moyen d'entrée (110), pour recevoir une luminance (LIₙ(i,j)) d'un point (PIₙ(i,j)) d'une trame (TIₙ) en cours d'un premier signal vidéo,
• un moyen de calcul (120), pour calculer à la volée une luminance (LOₙ(i,j)) d'un point (POₙ(i,j)) correspondant d'une trame (TOₙ) en cours d'un deuxième signal vidéo par une somme pondérée de la luminance (LIₙ(i,j)) du point reçu (PIₙ(i,j)) et d'une luminance (LIₙ₋₁(i,j)) précédemment mémorisée du point (PIₙ₋₁(i,j)) correspondant d'une trame précédant (TIₙ₋₁) la trame en cours (TIₙ) du premier signal, et
• un premier moyen de mémorisation (130) pour mémoriser la luminance (LIₙ(i,j)) du point reçu (PIₙ(i,j)) et de taille appropriée pour mémoriser tous les points d'une trame,
• un moyen de sortie (140) pour fournir à un dispositif d'affichage (200) un résultat (LOₙ(i,j) fourni par le moyen de calcul.

7. Dispositif de conversion selon la revendication 6, dans lequel le moyen de calcul comprend :
• un premier circuit de multiplication (121), pour multiplier la luminance du point reçu par un premier coefficient,
• un deuxième circuit de multiplication (122), pour multiplier la luminance du point précédemment mémorisé correspondant au point reçu par un deuxième coefficient,
• un circuit d'addition (123) pour additionner un résultat fourni par le premier circuit de multiplication et un résultat fourni par le deuxième circuit de multiplication et fournir un résultat au moyen de sortie.

8. Dispositif selon la revendication 8, dans lequel le moyen de calcul comprend également :
• un deuxième moyen de mémorisation (124a, 124b) pour mémoriser une première table contenant des valeurs du premier coefficient et une deuxième table contenant des valeurs du deuxième coefficient, et
• un moyen (125) pour extraire un premier coefficient de la première table et un deuxième coefficient de la deuxième table, en fonction de la luminance du point reçu et de la luminance du point précédemment mémorisé correspondant au point reçu.

9. Dispositif selon la revendication précédente, comprend également un moyen pour sélectionner, en fonction d'une température ambiante, la première table et la deuxième table parmi une pluralité de premières tables et une pluralité de deuxièmes tables en fonction de la température, chaque première table de la pluralité de première table et chaque deuxième table de la pluralité de deuxième table étant associées à une plage de températures, et pour mémoriser la première table et la deuxième table dans le moyen de calcul (120).
